# EUROPEAN PATENT SPECIFICATION

(11) **EP 1 310 385 B1**
(45) Date of publication and mention of the grant of the patent: **29.03.2006**
(21) Application number: 02024210.3
(22) Date of filing: 30.10.2002
(51) Int. Cl.: B60C 15/06

(54) **Pneumatic radial tire**
Radialluftreifen
Bandage pneumatique radial

(30) Priority: 08.11.2001 JP 2001343613; 14.11.2001 JP 2001349191
(43) Date of publication of application: 14.05.2003
(73) Proprietor: Sumitomo Rubber Industries, Ltd., Kobe-shi, Hyogo-ken (JP)
(72) Inventor: Minami, Nobuaki, c/o Sumitomo Rubber Ind., Ltd., Kobe-shi, Hyogo-ken (JP); Matsumoto, Tadao, c/o Sumitomo Rubber Ind., Ltd., Kobe-shi, Hyogo-ken (JP)
(74) Representative: Manitz, Finsterwald & Partner GbR

(56) References cited:
- EP-A- 0 573 853
- EP-A- 1 142 695
- PATENT ABSTRACTS OF JAPAN vol. 010, no. 311 (M-528), 23 October 1986 (1986-10-23) & JP 61 122010 A (BRIDGESTONE CORP), 10 June 1986 (1986-06-10)
- PATENT ABSTRACTS OF JAPAN vol. 010, no. 295 (M-523), 7 October 1986 (1986-10-07) & JP 61 110607 A (BRIDGESTONE CORP), 28 May 1986 (1986-05-28)

## Description

### BACKGROUND OF THE INVENTION

### Field of the Invention

The present invention relates to a pneumatic radial tire having an improved steering stability without deteriorating a durability and a ride comfortability by arranging a short fiber reinforcing rubber layer in a side surface of a bead apex rubber.

### Description of the Background Art

In recent years, in accordance with a high output and a high performance of a motor vehicle, with respect to a tire, a high ride comfortability and an improved steering stability have been strongly desired.

On the other hand, in a pneumatic radial tire, it has been known that the steering stability can be made higher by increasing a tire lateral rigidity. Accordingly, in conventional, a cord reinforcing layer using a steel cord or an organic fiber cord is provided from a bead portion to a side wall portion so as to increase a bending rigidity of the side wall.

However, since the use of the cord reinforcing layer as mentioned above causes an increase of a tire vertical rigidity, deterioration of the ride comfortability is generated. Further, the cord reinforcing layer tends to have a stress concentrated in an end portion thereof. In particular, in the case that the cord reinforcing layer is employed in a high performance tire in which a tire aspect ratio is reduced to be equal to or less than 55% so as to intend to increase a ground contact width or a ground contact area, a flexible area in the side wall portion becomes narrow and a stress concentration becomes significant, so that the durability tends to be further deteriorated.

Then, the present inventor has paid attention to a matter that not only the tire lateral rigidity but also a torsional rigidity in a rotational direction (that is, a rigidity in a circumferential direction) greatly takes part in the steering stability, and proposed to arrange a short fiber reinforcing rubber layer in which a complex elastic modulus in the peripheral direction is widely made high while maintaining a complex elastic modulus in a tire radial direction low by orienting the short fiber in the tire circumferential direction, along a side surface of the bead apex rubber without protruding from the bead apex rubber. Then, it is possible to inquire into the fact that the tire vertical rigidity can be maintained low while the torsional rigidity of the tire can become effectively high, whereby the steering stability can be improved.

EP-A-1 142 695 discloses a pneumatic radial tire according to the preamble of claim 1.

### SUMMARY OF THE INVENTION

The object of the present invention therefore is to provide a pneumatic radial tire in which the steering stability is improved without deteriorating durability and ride comfortability.

This object is achieved by a tire according to claim 1.

### BRIEF DESCRIPTION OF THE DRAWINGS

Fig. 1 is a cross sectional view showing an embodiment of a pneumatic radial tire according to the present invention;
Fig. 2 is a cross sectional view showing a bead portion together with a short fiber reinforcing rubber layer in an enlarged manner;
Fig. 3 is a cross sectional view showing a reinforcing rib in an enlarged manner;
Fig. 4 is a graph showing an example of change of a complex elastic modulus Ea* in a circumferential direction and a complex elastic modulus Eb* in a radial direction, on the basis of a compounding amount of the short fiber;
Fig. 5 is a cross sectional view showing another embodiment of the short fiber reinforcing rubber layer in an enlarged manner;
Fig. 6 is a perspective view showing one of effects of an inner short fiber reinforcing rubber layer rhetorically;
Fig. 7 is a cross sectional view showing still another embodiment of the short fiber reinforcing rubber layer in an enlarged manner; and
Fig. 8 is a graph describing a first comparative example in Table 1.

### DESCRIPTION OF THE PREFERRED EMBODIMENTS

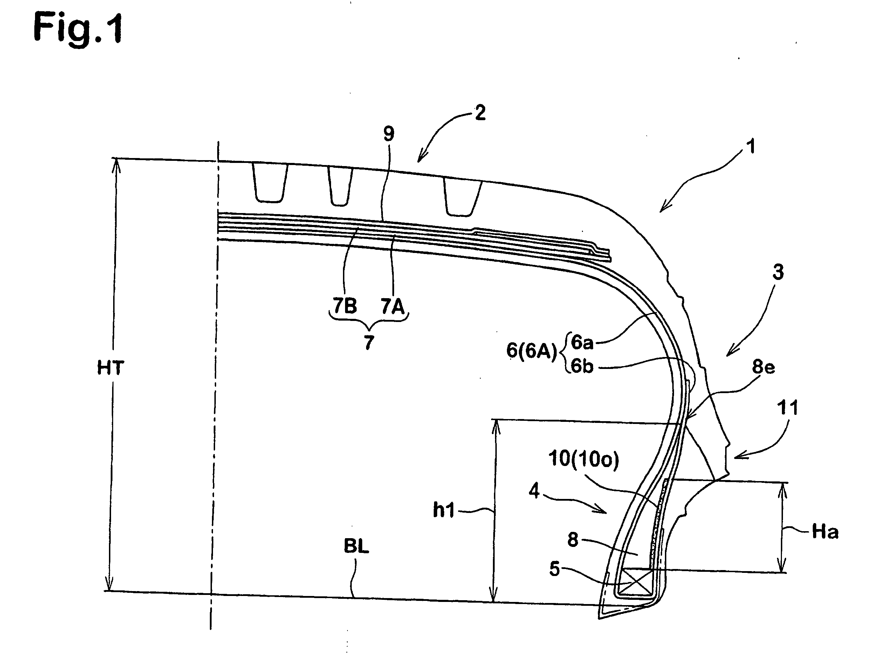

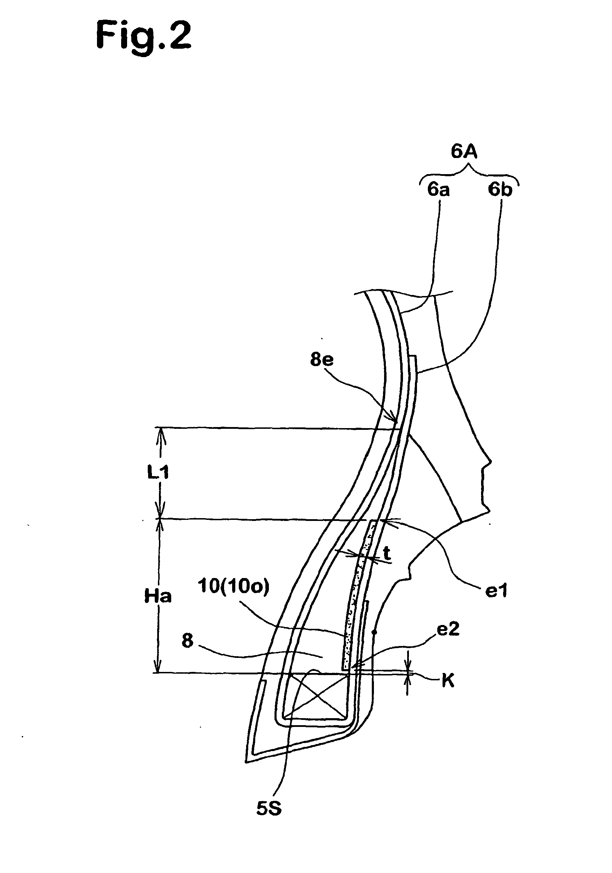

Hereinafter, embodiments of the present invention will be described with reference to the drawings. Fig. 1 is a meridian cross sectional view for illustrating a case that a pneumatic radial tire according to the present invention is a high-performance motor vehicle tire having a tire aspect ratio which is set to be equal to or less than 55%. Fig. 2 is a cross sectional view showing a bead portion in an enlarged manner.

As shown in Fig. 1, a pneumatic radial tire 1 includes: a carcass 6 extending into a bead core 5 of a bead portion 4 from a tread portion 2 via a side wall portion 3; and a belt layer 7 arranged in an inner side of the tread portion 2 and in an outer side in a radial direction of the carcass 6. Further, a bead apex rubber 8 rising up from an outer surface of the bead core 5 in a radial direction toward an outer side in a tire radial direction is provided in the bead portion 4.

The belt layer 7 is constituted by two or more, in the present embodiment, two belt plies 7A and 7B in which high elastic belt cords are arranged, for example, at an angle between 10° and 35° with respect to a tire circumferential direction. Since the belt cords cross to each other between the plies, each of the belt plies 7A and 7B increases a belt rigidity and firmly reinforces an approximately whole width of the tread portion 2 with a hoop effect. As the belt cord, there is preferably employed a steel cord, or a comparable high modulus organic fiber cord with the steel cord, for example, an aromatic polyamide fiber or the like.

Further, in the present embodiment, for the purpose of enhancing a binding force against the belt layer 7 so as to improve a high speed durability or the like, there is illustrated a case that a band layer 9 is arranged in an outer side of the belt layer 7. This band layer 9 has a band cord which is spirally wound, for example, at an angle equal to or less than 5° in the tire circumferential direction, and extends so as to cover at least an outer end portion of the belt layer 7 in a tire axial direction.

Further, the carcass 6 is formed from one or more, in the present embodiment, one carcass ply 6A in which a carcass cord is arranged at an angle between 75° and 90° with respect to the tire circumferential direction. This carcass ply 6A integrally includes fold-back portions 6b which are folded back from an inner side to an outer side around the bead core 5 at both ends of a main portion 6a suspending between the bead cores 5 and 5. As the carcass cord, the steel cord can be appropriately used in addition to the organic fiber cord such as a nylon, a rayon, a polyester, an aromatic polyamide and the like; however, the organic fiber cord is preferable in view of a weight saving.

Next, the bead apex rubber 8 is formed in a triangular cross sectional shape extending in a tapered shape toward an outer side in the tire radial direction through a portion between the main body portion 6a and the fold-back portion 6b in the carcass ply 6A. In the present embodiment, in order to secure a tire rigidity required for a high-performance tire, a height h1 of a radially outer end 8e from a bead base line BL is set to a range which is 0.25 to 0.5 times a tire cross sectional height HT. In this case, a high-modulus rubber having a complex elastic module E* between 35 and 60 Mpa is used for the bead apex rubber 8. In this case, a complex elastic modulus of the side wall rubber is normally about 2.5 to 6 Mpa.

Further, according to the present invention, in the tire 1 mentioned above, in order to improve a steering stability without deteriorating a durability and a ride comfortability, the bead portion 4 is provided with a short fiber reinforcing rubber layer 10.

In this case, in Figs. 1 to 3, there is illustrated a case that the short fiber reinforcing rubber layer 10 is constituted by an outer short fiber reinforcing rubber layer 10o which extends along an outer surface of the bead apex rubber 8 in the tire axial direction.

This short fiber reinforcing rubber layer 10 is a thin rubber layer substantially having a fixed rubber thickness t, as shown in Fig. 2, and extends along a side surface of the bead apex rubber 8 and to a height position inside the outer end 8e of the bead apex rubber 8 from the bead core 5 in a radial direction.

Further, the short fiber reinforcing rubber layer 10 is constituted by a short fiber compounded rubber in which short fibers are compounded at an amount of 10 to 30 parts by weight into 100 parts by weight of the rubber, and the short fibers are oriented in the tire circumferential direction. In this case, the wordings "oriented in the tire circumferential direction" means 90% or more of the short fibers are oriented within a range of angle between ±20° around the tire circumferential direction.

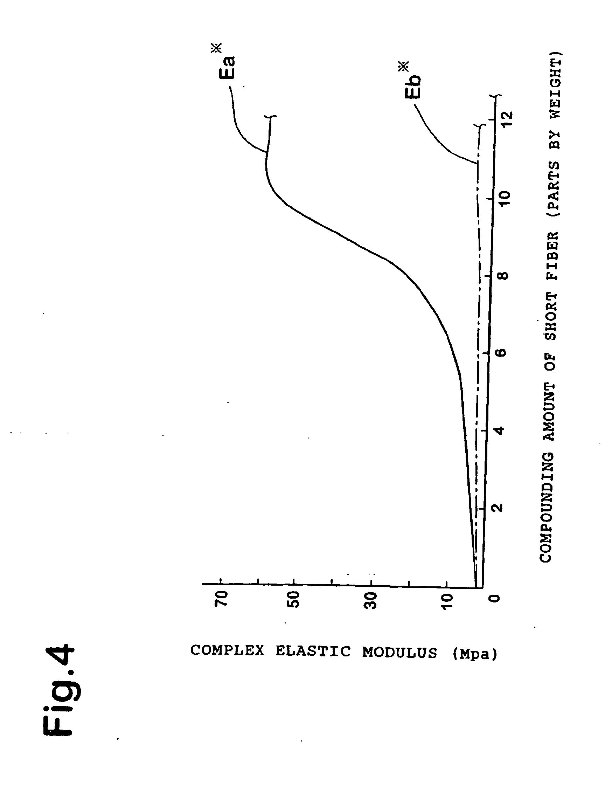

In accordance with the orientation of the short fibers, as shown in Fig. 4, the short fiber reinforcing rubber layer 10 can widely increase the complex elastic modulus Ea* in the tire circumferential direction while inhibiting the complex elastic modulus Eb* in the radial direction from being increased, whereby it is possible to increase a ratio Ea*/Eb*, for example, up to 10 or more. In this case, Fig. 4 shows an example of a change of the complex elastic modulus Ea* and Eb* in the circumferential direction and the radial direction, on the basis of a compounding amount of the short fibers.

As mentioned above, the short fiber reinforcing rubber layer 10 widely increases the complex elastic modulus Ea* in the tire circumferential direction. Accordingly, it is possible to effectively increase a rigidity in the tire circumferential direction, that is, a torsional rigidity at a time when the tire rotates, and it is possible to improve a steering stability. On the other hand, as shown in Fig. 4, since it is possible to almost avoid an influence applied to the complex elastic modulus Eb* in the radial direction, it is possible to maintain a tire vertical rigidity low, and it is possible to inhibit a ride comfortability from being lowered. In order to achieve the effect, it is necessary that the complex elastic modulus Ea* in the tire circumferential direction is larger than the complex elastic modulus E* of the bead apex rubber (Ea* > E*), and the complex elastic modulus Eb* in the radial direction is smaller than the complex elastic modulus E* of the bead apex rubber (Eb* < E*).

Further, in order to more significantly bring out an effect of improving the steering stability and inhibiting the ride comfortability from being lowered, it is preferable to set the ratio Ea*/Eb* to 10 to 30. When the ratio Ea*/Eb* is less than 10, the effect of improving the steering stability becomes insufficient, and in particular, a handle response tends to be lowered. Further, the ratio Ea*/Eb* exceeding 30 is technically hard to be established, causes a disadvantage in a productivity and a production cost, and tends to reduce a rubber strength. Accordingly, the ratio Ea*/Eb* is more preferably set to 15 to 25.

Further, if the complex elastic modulus Eb* in the tire radial direction is equal to or less than 10 Mpa, further equal to or less than 5 Mpa, a preferable ride comfortability is obtained.

In this case, the complex elastic modulus is a value measured by using a visco-elasticity spectrometer manufactured by Iwamoto Manufacturing Co. and under a condition of temperature 70°C, frequency 10 Hz, initial strain 10% and dynamic strain ±1%.

In this case, the short fiber tends to be oriented in an extruding direction at a time of extruding the short fiber compounded rubber in a sheet shape by an extruder or a calendar roll, and it is possible to orient the short fibers in the short fiber reinforcing rubber layer 10 in the circumferential direction by using this. However, when the thickness t of the short fiber reinforcing rubber layer 10 exceeds 2.0 mm, the orientation of the short fiber is deteriorated or the like, whereby it is hard to secure the ratio Ea*/Eb* equal to or more than 10. As a result, the effect of improving the steering stability becomes small, and the tire weight is also increased, thereby increasing a rolling resistance. Further, when the thickness t is smaller than 0.3 mm, it is impossible to bring out the reinforcing effect due to an excessive thin material, and it is hard to handle the material, thereby becoming disadvantageous in a productivity. For these reasons, the thickness is preferably 0.3 to 2.0 mm, and more preferably 0.3 to 1.5 mm.

Next, as a rubber base material of the short fiber compounded rubber, there can be preferably employed, for example, one of diene rubbers such as a natural rubber (NR), a styrene butadiene rubber (SBR), a butadiene rubber (BR), an isoprene rubber (IR) and the like, or a combination thereof.

Further, examples of the short fiber include inorganic fibers such as a metal fiber, a whisker, a boron, a glass fiber and the like in addition to organic fibers such as a nylon, a polyester, an aramid, a rayon, a vinylon, a cotton, a cellulose resin, a crystalline butadiene and the like. These can be singularly used or can be used in a combined state. More preferably, a suitable surface treatment may be subjected to the short fiber in order to improve an adhesion property to the rubber base material.

Further, an average fiber length L of the short fibers is preferably equal to or more than 20 µm, and more preferably 50 to 5000 µm. Further, an aspect ratio L/D between the average fiber length L and a fiber diameter D is preferably equal to or more than 10, and more preferably 20 to 500. In the case that the average fiber length L is less than 20 µm and the aspect ratio L/D is less than 10, a sufficient difference can not be secured between the complex elastic modulus Ea* and Eb* even when the short fibers are orientated at a high accuracy. As a result, it becomes hard to achieve both of the improvement in the steering stability and the inhibition of reduction in the ride comfortability. On the contrary, when the average fiber length L is larger than 5000 µm and the aspect ratio L/D is larger than 500, the orientation itself of the short fiber is reduced, thereby making it hard to achieve the both in the same manner.

Further, it is necessary that the compounding amount of the short fibers is 10 to 30 parts by weight. When it is less than 10 parts by weight, the reinforcing effect is inferior, so that it is impossible to secure the required complex elastic modulus Ea* in the tire circumferential direction. Therefore, it is impossible to bring out the effect of improving the steering stability. On the contrary, when it exceeds 30 parts by weight, the complex elastic modulus Ea* in the tire radial direction tends to rise up so as to reduce the ride comfortability, even in the case that the short fibers are orientated at a high accuracy. Further, a viscosity of unvulcanized rubber is increased, and a working property is reduced.

In the short fiber compounded rubber, it is possible to further compound the carbon black to the rubber base material. As the carbon black, it can preferably use a carbon black having an iodide absorption of 30 to 90 mg/g. In the carbon black having the iodide absorption of less than 30 mg/g, a rubber reinforcing property is low, and both of a strength and a cut resistance are deteriorated. On the contrary, when it exceeds 90 mg/g, a heat generating property becomes high so as to cause a deterioration of a rolling resistance.

The compounding amount of the carbon black is equal to or less than 40 parts by weight with respect to 100 parts by weight of the rubber base material, preferably 20 to 30 parts by weight. When it exceeds 40 parts by weight, the heat generating property of the rubber becomes high and the rolling resistance is deteriorated. In addition to the short fiber and the carbon black, the conventional additive for tire rubber such as an oil, age resister, wax, vulcanization accelerator and the like can be suitably compounded as the additive to the short fiber compounded rubber.

Further, in the short fiber reinforcing rubber layer 10, since an outer end e1 in the radial direction is disposed in an inner side in the radial direction of the outer end 8e of the bead apex rubber 8, a stress concentration can be reduced, whereby it is possible to prevent the durability from being deteriorated. In particular, it is preferable in view of the durability to set a radial distance L1 between the outer end e1 and the outer end 8e to be equal to or more than 3 mm, and further equal to or more than 5 mm.

Further, it is preferable that a height Ha of the outer end e1 from the bead core 5, that is, a width in the radial direction of the short fiber reinforcing rubber layer 10 is 0.1 to 0.25 times a tire cross sectional height HT. When it is less than 0.1 times, it is impossible to bring out the effect of improving the steering stability. On the contrary, when it exceeds 0.2 times, there is a disadvantage that the ride comfortability is deteriorated.

Further, it is preferable that the short fiber reinforcing rubber layer 10 extends in a substantially linear shape from an inner end e2 to the outer end e1, as in the present embodiment, whereby it is possible to more effectively increase the torsional rigidity. Here, the "substantially linear shape" means a structure in which a diameter of a three-point circular arc passing through the inner end e2, the outer end e1 and a middle point thereof in the short fiber reinforcing rubber layer 10 is equal to or more than 100 mm. Further, the inner end e2 is preferably structured such as to have a distance K equal to or less than 3 mm in the radial direction from the outer surface 5S of the bead core 5, and be close to the outer surface 5S as much as possible.

Further, the short fiber reinforcing rubber layer 10 is arranged so as to be sandwiched between the bead apex rubber 8 and the carcass 6. Therefore, the rubber is inhibited from flowing at a time of being vulcanized, and it is possible to secure the rubber thickness t to be uniform. In this case, in the case that the short fiber reinforcing rubber layer 10 is provided in the other portions than the portion between the bead apex rubber 8 and the carcass 6, the rubber thickness t is partly changed, thereby forming a weak point in strength, so that the durability tends to be deteriorated.

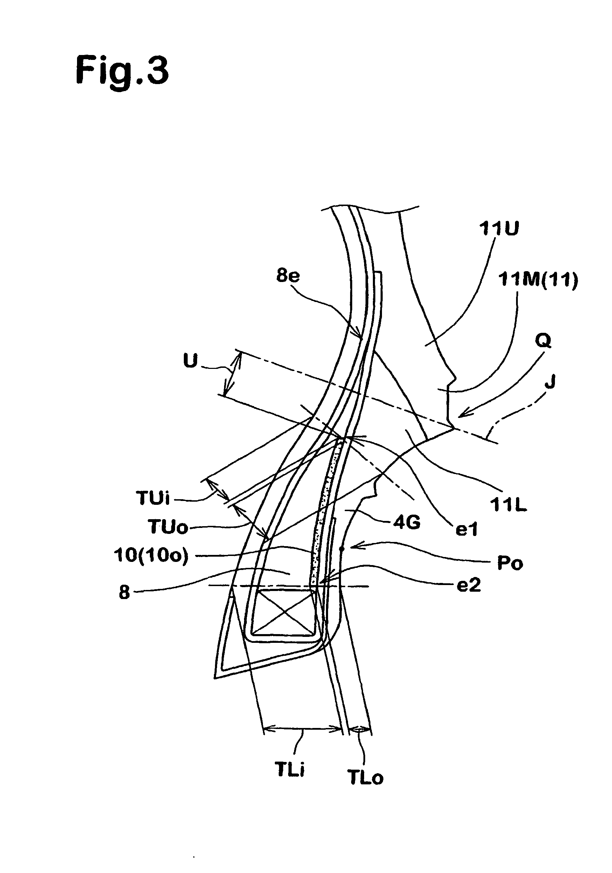

Further, in the case that the short fiber reinforcing rubber layer 10 is the outer short fiber reinforcing rubber layer 10 as in the present embodiment, it is preferably to structure as follows. That is, as shown in Fig. 3, it is preferable to set a ratio TLi/TLo between a thickness TLi corresponding a minimum distance from the inner end e2 of the outer short fiber reinforcing rubber layer 10 to the tire inner surface, and a thickness TLo corresponding to a minimum distance to the tire outer surface to 1.0 to 7.0, and set a ratio TUi/TUo between a thickness TUi from the outer end e1 to the tire inner surface, and a thickness TUo to the tire outer surface to 0.3 to 1.0.

By structuring in the manner mentioned above, it is easy to form the outer short fiber reinforcing rubber layer 10 in a substantially linear shape. Further, in the bead portion 4, since a clinch rubber 4G forming the bead outer side surface has an elasticity lower than the bead apex rubber 8, a neutral line of the tire bending deformation moves to an inner side in the tire axial direction toward the outer side in the tire radial direction. Accordingly, by setting the ratio TLi/TLo and the ratio TUi/TUo to the ranges mentioned above, the outer short fiber reinforcing rubber layer 10 moves close to the neutral line side of the tire bending deformation. Therefore, the bending stress applied to the outer short fiber reinforcing rubber layer 10 is reduced, and an advantage is achieved in view of the durability and the ride comfortability.

Further, in the present embodiment, for the purpose of preventing the rim from coming off at a time of run-flat traveling, there is illustrated a case that a reinforcing rib 11 for preventing the rim from coming off is provided on an outer surface of the side wall portion 3. This reinforcing rib 11 is, as shown in Fig. 3, formed in a substantially trapezoidal shape constituted by a center portion 11M which most protrudes to an outer side in the tire axial direction and has a maximum thickness, and inner and outer inclined portions 11U and 11L which extend to an inner side and an outer side in the radial direction from the center portion 11M so as to reduce the thickness. Further, the reinforcing rib 11 is formed at a position in an outer side in the radial direction from a flange apart point P0 moving apart from the rim flange.

In the tire provided with the reinforcing rib 11 as mentioned above, the stress of the bending deformation tends to be concentrated to the inner side in the radial direction from the maximum thickness Q of the center portion 11M, and this inner side is a portion which tends to cause a trouble. Accordingly, in view of the durability, it is preferable that the outer end e1 of the outer short fiber reinforcing rubber layer 10 is disposed to the inner side in the radial direction at a distance U equal to or more than 3 mm apart from a thickness direction line J below the tire inner surface from the maximum thickness point Q. Further, in the same manner, in view of the durability, it is preferable that the outer end 8e of the bead apex rubber 8 is positioned in the outer side in the radial direction from the thickness direction line J, and further positioned in the outer side in the radial direction from the center portion 11M as in the present embodiment.

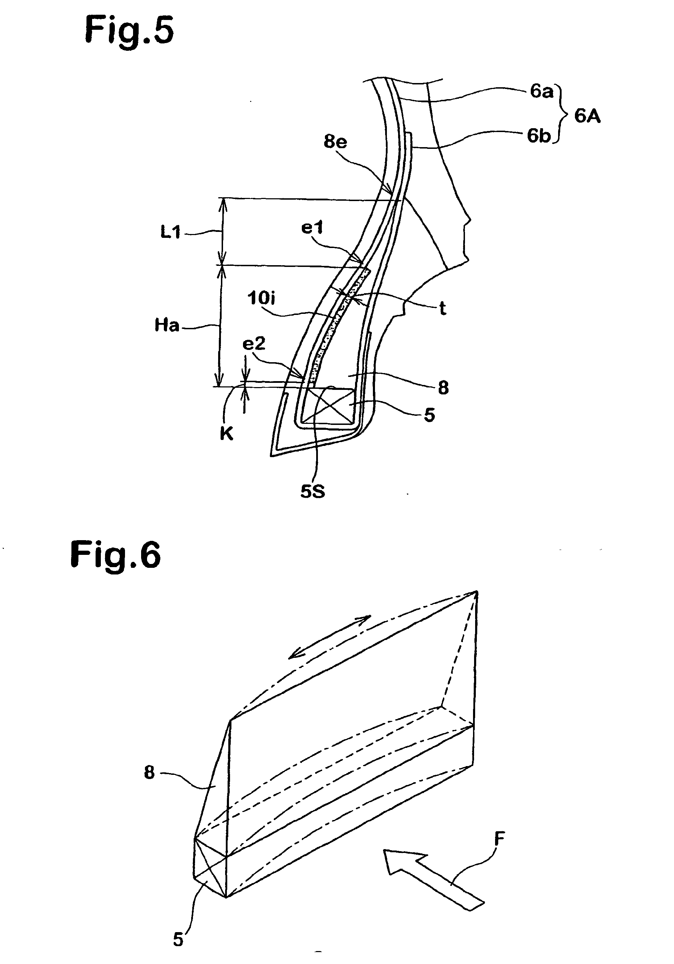

Next, the short fiber reinforcing rubber layer 10 may be, as shown in Fig. 5, formed as an inner short fiber reinforcing rubber layer 10i which extends along an inner side surface in the tire axial direction of the bead apex rubber 8.

In such a case, a cornering force becomes high, and it is possible to bring out a further excellent steering stability together with the torsional rigidity. Because the inner surface side of the bead apex rubber 8 is pulled and the outer surface side is exposed to the compression at a time when the great lateral force F is applied and the bead portion 4 is bent inward in the tire axial direction, as shown in Fig. 6 rhetorically. Accordingly, it is possible to effectively obtain a drag by providing the short fiber reinforcing rubber layer 10 in the inner surface side corresponding to the pull side rather than by providing the short fiber reinforcing rubber layer 10 in the outer surface side. Then, it is possible to increase the cornering force.

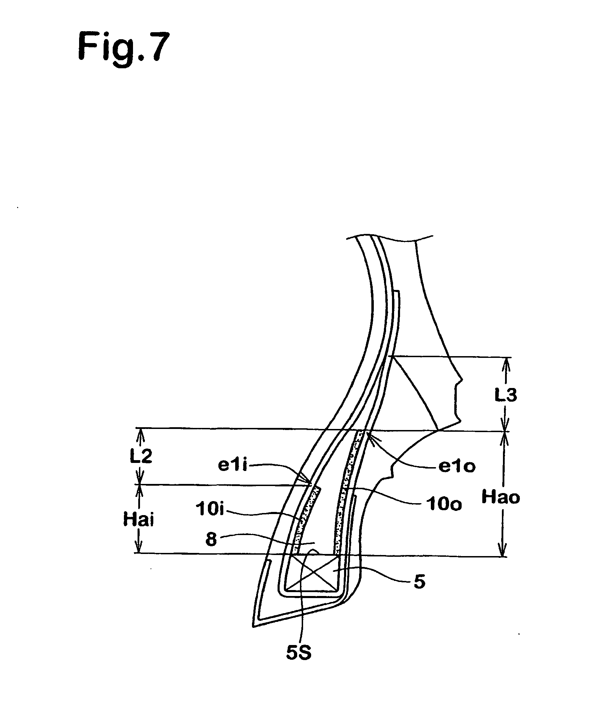

Further, it is possible to form the short fiber reinforcing rubber layer 10 by both of the outer short fiber reinforcing rubber layer 10o and the inner short fiber reinforcing rubber layer 10i, as shown in Fig. 7.

At this time, if the height positions of the respective outer ends e1i and elo in the inner and outer short fiber reinforcing rubber layers 10i and 10o are too close to each other, the durability tends to be reduced due to the stress concentration. Accordingly, in accordance with the present embodiment, the outer end e1i is terminated in the inner side in the radial direction rather than the outer end clo, thereby intending to disperse the stress. Because the inner short fiber reinforcing rubber layer 10i is positioned farther from the neutral line of the tire bending deformation than the outer short fiber reinforcing rubber layer 10o, thereby affecting largely to the bending rigidity. Accordingly, it becomes advantageous in view of the ride comfortability to make the outer end e1i low.

Further, for the purpose of maintaining the durability, it is preferable to make a distance L2 in the radial direction between the outer ends e1i and elo equal to or more than 5 mm, and for the same purpose, it is preferable to make a distance L3 in the radial direction between the outer end elo and the outer end 8e of the bead apex rubber 8 equal to or more than 3.0 mm.

When the height Hao of the outer short fiber reinforcing rubber layer 10o is within a range of 0.1 to 0.25 times the tire cross sectional height HT, a lower limit value of the height Hai of the inner short fiber reinforcing rubber layer 10i may be reduced to 0.08 × HT.

Here, the operation and effect by the short fiber reinforcing rubber layer 10 can effectively function by a high-performance tire having a tire aspect ratio of 30 to 55%, as in the present embodiment, however, the present invention is not limited by the illustrated embodiment and can be carried out by various modifications.

### Examples

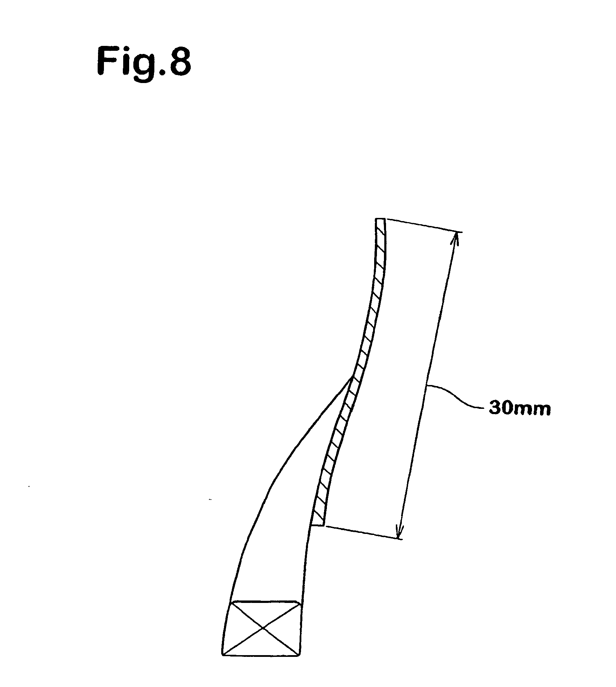

A tire having a tire size of 215/45ZR17 and a structure shown in Fig. 1 was manufactured by way of trial on the basis of the specification in Table 1, and a steering stability and a ride comfortability of each of the tires were tested. In a first comparative example, as shown in Fig. 8 for short, a cord reinforcing layer of a steel cord is provided so as to protrude from an outer end of a bead apex rubber. Further, rubber compositions of short fiber reinforcing rubber layers used in first to third embodiments are the same, and the specification thereof is shown in Table 2.

Test methods are as follows.

### (1) Steering stability

The tires are attached to all the wheels of a passenger car (a domestic FR passenger car, 2500 cc displacement) under a condition of a rim (17 × 7JJ) and an internal pressure (200 kPa), and high speed travel on a dry asphalt road surface at a speed of 120 km/H, a straight traveling stability and a lane change stability are indicated by index numbers in which the conventional example is set to 100, on the basis of a sensory estimation of a driver. The greater the index is, the better the stability is.

The same test vehicle is used, and travels on a wet asphalt road at a speed of 80 km/H, and a whole of the steering stability including the straight traveling stability and the lane change stability at that time is indicated by index numbers in which the conventional example is set to 100, on the basis of the sensory estimation of the driver. The greater the index is, the better the stability is.

### (2) Ride comfortability

A ride comfortability at a time of using the same test vehicle and traveling on an asphalt road surface (good road) is indicated by index numbers in which the conventional example is set to 100, on the basis of the sensory estimation of the driver. The greater the index is, the better the quality is.

The ride comfortability at a time of using the same test vehicle and traveling on a belgian brick road surface (bad road) is indicated by index numbers in which the conventional example is set to 100, on the basis of the sensory estimation of the driver. The greater the index is, the better the quality is.

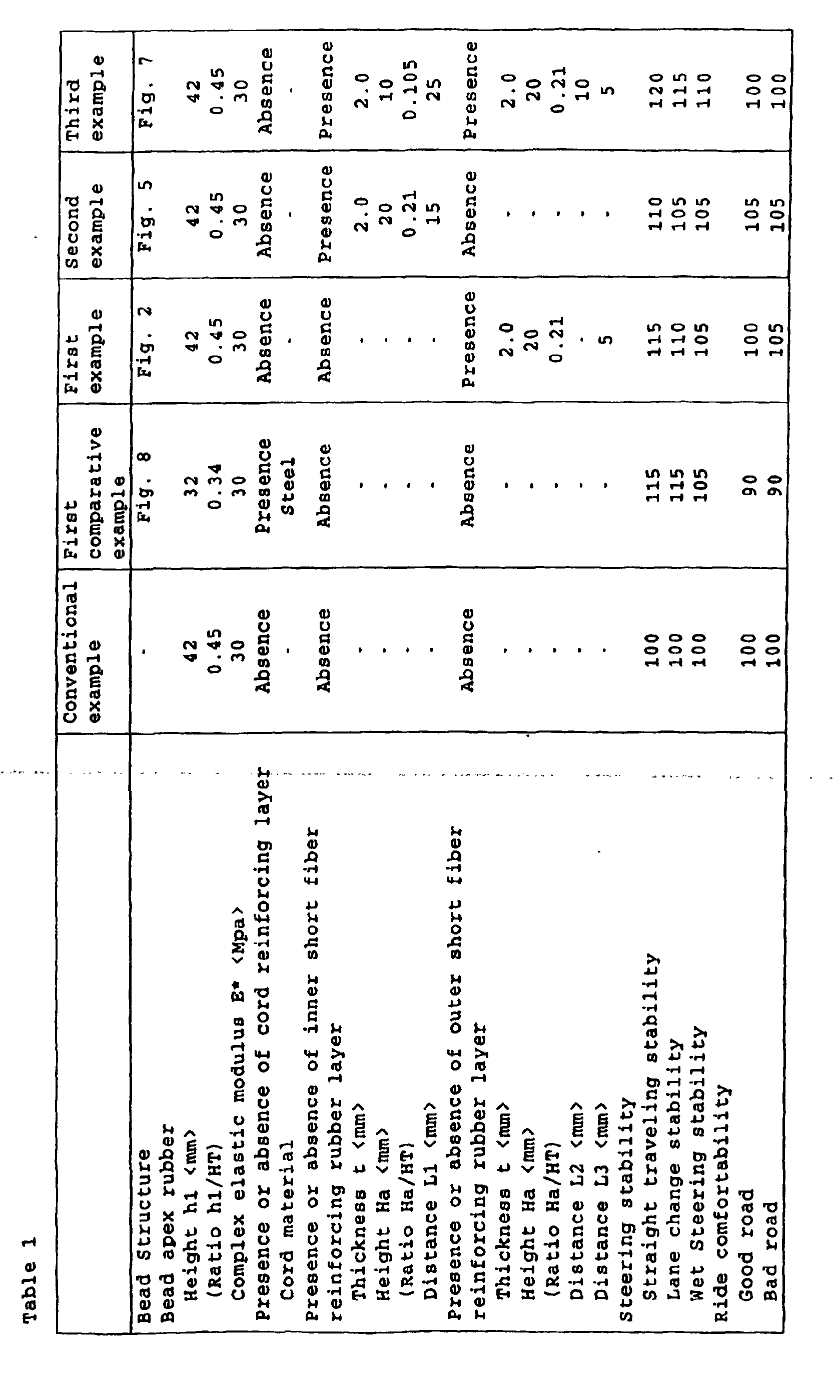

**Table 2**

| In short fiber reinforcing rubber | | |
|---|---|---|
| | Complex elastic modulus Ea* <Mpa> | 70 |
| | Complex elastic modulus Eb* <Mpa> | 5 |
| | (Ratio Ea*/Eb*) | 14 |
| | Orientation of short fiber | Circumferential |
| | | direction |
| | Material of short fiber | Aromatic polyamide |
| | Compounding amount of short fiber | 30 |
| | Average fiber length L <µm> | 500 µm |
| | Fiber diameter D <µm> | 10 µm |
| | (Ratio L/D) | 50 |

As mentioned above, according to the present invention, since the short fiber reinforcing rubber layer in which the short fibers are orientated in the tire circumferential direction is arranged along the side surface of the bead apex rubber, it is possible to improve the steering stability without deteriorating the durability and the ride comfortability.

## Claims

1. A pneumatic radial tire comprising:
a carcass (6) extending into a bead core (5) of a bead portion (4) from a tread portion (2) via a side wall portion (3); and
a bead apex rubber (8) extending in a tapered manner from an outer surface of the bead core (5) in a radial direction toward an outer side in a tire radial direction, wherein
the bead portion (4) has a short fiber reinforcing rubber layer (10) constituted by a short fiber compounded rubber extending along a side surface of the bead apex rubber (8) and extending in a radial direction from the bead core (5) to a height position, and the short fibers are oriented in the tire circumferential direction, **characterized in that** the height position is inside of an outer end (8e) in a radial direction of the bead apex rubber (8), **in that** the short fibers in the short fiber reinforcing rubber layer (10) are compounded at an amount of 10 to 30 parts by weight with respect to 100 parts by weight of the rubber, and **in that** the short fiber reinforcing rubber layer (10) has a complex elastic modulus Ea* in a tire circumferential direction larger than a complex elastic modulus E* of the bead apex rubber (8), a complex elastic modulus Eb* in a radial direction smaller than the complex elastic modulus E* of the bead apex rubber (8), and a ratio Ea*/Eb*, between the complex elastic modulus Ea* and Eb*, of 10 to 30.

2. The pneumatic radial tire according to claim 1, wherein
the short fiber reinforcing rubber layer (10) has a thickness (t) of 0.3 to 2.0 mm.

3. The pneumatic radial tire according to claim 1, wherein
the short fiber has an average fiber length L of 20 mu m to 5000 mu m, and an aspect ratio L/D, between the average fiber length L and a fiber diameter D, of 10 to 500.

4. The pneumatic radial tire according to claim 1, wherein
the short fiber reinforcing rubber layer (10) has a complex elastic modulus Eb* in the radial direction of equal to or less than 10 Mpa.

5. The pneumatic radial tire according to claim 1, wherein
the short fiber reinforcing rubber layer (10) has a radial distance, between an outer end (e1) in a radial direction thereof and an outer end (8e) in a radial direction of the bead apex rubber (8), of equal to or more than 3 mm.

6. The pneumatic radial tire according to claim 1, wherein
the short fiber reinforcing rubber layer (10) has a height Ha, of an outer end (e1) in the radial direction from the bead core (5), of 0.1 to 0.25 times a tire cross sectional height HT.

7. The pneumatic radial tire according to claim 1, wherein
the short fiber reinforcing rubber layer (10) is constituted by an outer short fiber reinforcing rubber layer (10o) which extends along an outer side surface in the tire axial direction of the bead apex rubber (8).

8. The pneumatic radial tire according to claim 1, wherein
the short fiber reinforcing rubber layer (10) is constituted by an inner short fiber reinforcing rubber layer (10i) which extends along an inner side surface in the tire axial direction of the bead apex rubber.

9. The pneumatic radial tire according to claim 1, wherein
the short fiber reinforcing rubber layer (10) is constituted by an outer short fiber reinforcing rubber layer (10o) which extends along an outer side surface in the tire axial direction of the bead apex rubber (8), and an inner short fiber reinforcing rubber layer (10i) which extends along an inner side surface in the tire axial direction.

10. The pneumatic radial tire according to claim 7, wherein
the outer short fiber reinforcing rubber layer (10o) has a ratio TLi/TLo, between a thickness TLi corresponding to a minimum distance from an inner end (e2) in a radial direction thereof to a tire inner surface, and a thickness TLo corresponding to a minimum distance to a tire outer surface, of 1.0 to 7.0, and a ratio TUi/TUo, between a thickness TUi from an outer end (e1) in the radial direction thereof to a tire inner surface, and a thickness TUo to the tire outer surface, of 0.3 to 1.0.

11. The pneumatic radial tire according to claim 9, wherein
the outer end (e1i) in the radial direction of the inner short fiber reinforcing rubber layer (10i) is positioned at an inner side in the radial direction rather than the outer end (e1o) in the radial direction of the outer short fiber reinforcing rubber layer (10o).

12. The pneumatic radial tire as claimed in claim 9, wherein
a distance in the radial direction between the outer ends (e1i, e1o) of said inner and outer short fiber reinforcing rubber layers (10i, 10o) is set to be equal to or more than 5 mm.

## Patentansprüche

1. Radialluftreifen, umfassend:
eine Karkasse (6), die sich in einen Wulstkern (5) eines Wulstabschnitts (4) von einem Laufflächenabschnitt (2) über einen Seitenwandabschnitt (3) erstreckt; und
einen Wulstkernreitergummi (8), der sich auf eine verjüngende Weise von einer äußeren Oberfläche des Wulstkerns (5) in einer radialen Richtung zu einer äußeren Seite in einer radialen Richtung des Reifens erstreckt, wobei
der Wulstabschnitt (4) eine Kurzfaser-Verstärkungsgummischicht (10) aufweist, die aus mit Kurzfasern gemischtem Gummi gebildet ist und die sich entlang einer Seitenfläche des Wulstkernreitergummis (8) und in einer radialen Richtung von dem Wulstkern (5) bis zu einer Höhenposition erstreckt, und wobei die Kurzfäsem in der Umfangsrichtung des Reifens orientiert sind,
**dadurch gekennzeichnet, dass**
die Höhenposition sich innerhalb eines äußeren Endes (8e) in einer radialen Richtung des Wulstkernreitergummis (8) befindet, dass die Kurzfasern in die Kurzfaser-Verstärkungsgummischicht (10) in einer Menge von 10 bis 30 Gewichtsteilen in Bezug auf 100 Gewichtsteile des Gummis hineingemischt sind, und dass die Kurzfaser-Verstärkungsgummischicht (10) einen komplexen Elastizitätsmodul Ea* in einer Umfangsrichtung des Reifens, der größer ist als ein komplexer Elastizitätsmodul E* des Wulstkernreitergummis (8), einen komplexen Elastizitätsmodul Eb* in einer radialen Richtung, der kleiner ist als der komplexe Elastizitätsmodul E* des Wulstkernreitergummis (8), und ein Verhältnis Ea*/Eb* zwischen den komplexen Elastizitätsmoduln Ea* und Eb* von 10 bis 30 aufweist.

2. Radialluftreifen nach Anspruch 1, wobei
die Kurzfaser-Verstärkungsgummischicht (10) eine Dicke (t) von 0,3 bis 2,0 mm aufweist.

3. Radialluftreifen nach Anspruch 1, wobei
die Kurzfaser eine durchschnittliche Faserlänge L von 20 mu m bis 5000 mu m und ein Aspektverhältnis L/D zwischen der durchschnittlichen Faserlänge L und einem Faserdurchmesser D von 10 bis 500 aufweist.

4. Radialluftreifen nach Anspruch 1, wobei
die Kurzfaser-Verstärkungsgummischicht (10) einen komplexen Elastizitätsmodul Eb* in der radialen Richtung von gleich oder weniger als 10 MPa aufweist.

5. Radialluftreifen nach Anspruch 1, wobei
die Kurzfaser-Verstärkungsgummischicht (10) einen radialen Abstand zwischen einem äußeren Ende (e1) in einer radialen Richtung von dieser und einem äußeren Ende (8e) des Wulstkernreitergummis (8) in einer radialen Richtung von gleich oder mehr als 3 mm aufweist.

6. Radialluftreifen nach Anspruch 1, wobei
die Kurzfaser-Verstärkungsgummischicht (10) eine Höhe Ha eines äußeren Endes (e1) in der radialen Richtung von dem Wulstkern (5) von dem 0,1- bis 0,25-fachen einer Querschnittshöhe HT des Reifens aufweist.

7. Radialluftreifen nach Anspruch 1, wobei
die Kurzfaser-Verstärkungsgummischicht (10) durch eine äußere Kurzfaser-Verstärkungsgummischicht (10o) gebildet ist, die sich entlang einer äußeren Seitenfläche des Wulstkernreitergummis (8) in der axialen Richtung des Reifens erstreckt.

8. Radialluftreifen nach Anspruch 1, wobei
die Kurzfaser-Verstärkungsgummischicht (10) durch eine innere Kurzfaser-Verstärkungsgummischicht (10i) gebildet ist, die sich entlang einer inneren Seitenfläche des Wulstkernreitergummis in der axialen Richtung des Reifens erstreckt.

9. Radialluftreifen nach Anspruch 1, wobei
die Kurzfaser-Verstärkungsgummischicht (10) durch eine äußere Kurzfaser-Verstärkungsgummischicht (10o), die sich entlang einer äußeren Seitenfläche des Wulstkernreitergummis (8) in der axialen Richtung des Reifens erstreckt, und eine innere Kurzfaser-Verstärkungsgummischicht (10i), die sich entlang einer inneren Seitenfläche in der axialen Richtung des Reifens erstreckt, gebildet ist.

10. Radialluftreifen nach Anspruch 7, wobei
die äußere Kurzfaser-Verstärkungsgummischicht (10o) ein Verhältnis TLi/TLo zwischen einer Dicke TLi, die einem minimalen Abstand von einem inneren Ende (e2) in einer radialen Richtung von dieser bis zu einer inneren Oberfläche des Reifens entspricht, und einer Dicke TLo, die einen minimalen Abstand bis zu einer äußeren Oberfläche des Reifens entspricht, von 1,0 bis 7,0 und ein Verhältnis TUi/TUo zwischen einer Dicke TUi von einem äußeren Ende (e1) in der radialen Richtung von dieser bis zu einer inneren Oberfläche des Reifens, und einer Dicke TUo bis zu der äußeren Oberfläche des Reifens von 0,3 bis 1,0 aufweist.

11. Radialluftreifen nach Anspruch 9, wobei
das äußere Ende (eli) der inneren Kurzfaser-Verstärkungsgummischicht (10i) in der radialen Richtung an einer inneren Seite in der radialen Richtung statt an dem äußeren Ende (e1o) in der radialen Richtung der äußeren Kurzfaser-Verstärkungsgummischicht (10o) angeordnet ist.

12. Radialluftreifen nach Anspruch 9, wobei
ein Abstand zwischen den äußeren Enden (e1i, e1o) der inneren und äußeren Kurzfaser-Verstärkungsgummischichten (10i, 10o) in der radialen Richtung auf gleich oder mehr als 5 mm festgelegt ist.

## Revendications

1. ; Bandage pneumatique radial comprenant :
une carcasse (6) s'étendant dans une tringle (5) d'une partie de talon (4) depuis une partie de chape (2) via une partie de paroi latérale (3) ; et
un caoutchouc support-talons (8) s'étendant d'une manière progressive depuis une surface externe de la tringle (5) dans un sens radial vers un côté externe dans un sens radial du bandage, dans lequel
la partie de talon (4) a une couche de renforcement en caoutchouc à fibres courtes (10) constituée par un caoutchouc composé de fibres courtes s'étendant le long d'une surface latérale du caoutchouc support-talons (8) et s'étendant dans une direction radiale depuis la tringle (5) jusqu'à une position de hauteur, et les fibres courtes sont orientées dans le sens circonférentiel du bandage, **caractérisé en ce que** la position de hauteur se trouve à l'intérieur d'une extrémité externe (8e) dans un sens radial du caoutchouc support-talons (8), **en ce que** les fibres courtes dans la couche de renforcement en caoutchouc à fibres courtes (10) sont composées en une quantité de 10 à 30 parties en poids relativement à 100 parties en poids du caoutchouc, et **en ce que** la couche de renforcement en caoutchouc à fibres courtes (10) a un module d'élasticité complexe Ba* dans un sens circonférentiel du bandage supérieur à un module d'élasticité complexe E* du caoutchouc support-talons (8), un module d'élasticité complexe Eb* dans un sens radial inférieur au module d'élasticité complexe E* du caoutchouc support-talons (8), et un rapport Ea*/Eb*, entre les modules d'élasticité complexes Ea* et Eb*, de 10 sur 30.

2. Bandage pneumatique radial selon la revendication 1, dans lequel la couche de renforcement en caoutchouc à fibres courtes (10) a une épaisseur (t) de 0,3 à 2,0 mm.

3. Bandage pneumatique radial selon la revendication i, dans lequel la fibre courte a une longueur moyenne de fibre L de 20 µm à 5000 µm, et un rapport d'aspect L/D, entre la longueur de fibres moyenne L et un diamètre de fibres D, de 10 sur 500.

4. Bandage pneumatique radial selon la revendication 1, dans lequel la couche de renforcement en caoutchouc à fibres courtes (10) a un module d'élasticité complexe Eb* dans le sens radial inférieur ou égal à 10 Mpa.

5. Bandage pneumatique radial selon la revendication 1, dans lequel la couche de renforcement en caoutchouc à fibres courtes (10) a une distance radiale, entre une extrémité externe (e1) dans un sens radial de celle-ci et une extrémité externe (8e) dans un sens radial du caoutchouc support-talons (8), supérieure ou égale à 3 mm.

6. Bandage pneumatique radial selon la revendication 1, dans lequel la couche de renforcement en caoutchouc à fibres courtes (10) a une hauteur Ha, d'une extrémité externe (e1) dans le sens radial depuis la tringle (5), de 0,1 à 0,25 fois une hauteur transversale du bandage HT.

7. Bandage pneumatique radial selon la revendication 1, dans lequel la couche de renforcement en caoutchouc à fibres courtes (10) est constituée par une couche de renforcement externe en caoutchouc à fibres courtes (10o) qui s'étend le long d'une surface latérale externe dans le sens axial du bandage du caoutchouc support-talons (8).

8. Bandage pneumatique radial selon la revendication 1, dans lequel la couche de renforcement en caoutchouc à fibres courtes (10) est constituée par une couche de renforcement interne en caoutchouc à fibres courtes (10i) qui s'étend le long d'une surface latérale interne dans le sens axial du bandage du caoutchouc support-talons.

9. Bandage pneumatique radial selon la revendication 1, dans lequel la couche de renforcement en caoutchouc à fibres courtes (10) est constituée par une couche de renforcement externe en caoutchouc à fibres courtes (10o) qui s'étend le long d'une surface latérale externe dans le sens axial du bandage du caoutchouc support-talons (8), et une couche de renforcement interne en caoutchouc à fibres courtes (10i) qui s'étend le long d'une surface latérale interne dans le sens axial du bandage.

10. Bandage pneumatique radial selon la revendication 7, dans lequel la couche de renforcement externe en caoutchouc à fibres courtes (10o) a un rapport TLi/TLo, entre une épaisseur TLi correspondant à une distance.minimale depuis une extrémité interne (e2) dans un sens radial de celle-ci jusqu'à une surface interne du bandage, et une épaisseur TLo correspondant à une distance minimale jusqu'à une surface externe du bandage, de 1,0 sur 7,0, et un rapport TUi/TUo, entre une épaisseur TUi depuis une extrémité externe (e1) dans le sens radial de celui-ci jusqu'à une surface interne du bandage, et une épaisseur TUo jusqu'à la surface externe du bandage, de 0,3 sur 1,0.

11. Bandage pneumatique radial selon la revendication 9, dans lequel l'extrémité externe (e1i) dans le sens radial de la couche de renforcement interne en caoutchouc à fibres courtes (10i) est positionnée à un côté interne dans le sens radial plutôt qu'à une extrémité externe (e1o) dans le sens radial de la couche de renforcement externe en caoutchouc à fibres courtes (10o).

12. Bandage pneumatique radial selon la revendication 9, dans lequel une distance dans le sens radial entre les extrémités externes (e1i, e1o) desdites couches de renforcement internes et externes en caoutchouc à fibres courtes (10i, 10o) est définie pour être supérieure ou égale à 5 mm.
